# EUROPEAN PATENT APPLICATION

(11) **EP 3 182 699 A1**
(43) Date of publication of application: **21.06.2017**
(21) Application number: 16204768.2
(22) Date of filing: 16.12.2016
(51) Int. Cl.: H04N 5/44, H04N 5/63, G08C 17/02, H04N 21/422, H04N 21/443

(54) **DISPLAY APPARATUS AND METHOD FOR CONTROLLING DISPLAY APPARATUS**

(30) Priority: 18.12.2015 KR 20150181953
(71) Applicant: Samsung Electronics Co., Ltd, Gyeonggi-do 16677 (KR)
(72) Inventor: YANG, Geun-sam, Suwon-si Gyeonggi-do (KR); LEE, Seung-bok, Hwaseong-si Gyeonggi-do (KR)
(74) Representative: Hewett, Jonathan Michael Richard

(57) **Abstract**

A display apparatus and method for controlling a display apparatus is capable of controlling a screen of the display apparatus using a remote controller according to a standard of Bluetooth low energy (BLE) are provided. The display apparatus and method for controlling a display apparatus is capable of controlling a screen of the display apparatus using an internal sensor in a remote controller according to a standard of Bluetooth low energy (BLE).

## Description

The present invention relates to a display apparatus and a method for controlling a display apparatus, and more particularly, to a display apparatus capable of being quickly booted using a remote controller and a method for controlling a display apparatus.

As an interface between a display apparatus and a user, a panel key (or function key) of the display apparatus has been used or a remote control or controller has been mostly used. With the development of technology, functions of the display apparatus are complicated (for example, execution of various applications, game execution, etc.) and various, and as a result the display apparatus may execute content like moving pictures downloaded from the outside or provide even internet browsing.

As the functions of the display apparatus are complicated and various, booting time of the display apparatus is getting longer. Aside from the high-performance display apparatus, a necessity for shortening or reducing or improving the booting time of the display apparatus has emerged.

According to an aspect of the present invention, a display apparatus includes a display, a communicator connecting the display apparatus with a remote controller, and a controller controlling the display and the communicator, in which the controller may control the display apparatus to be connected with the remote controller depending on an advertising packet received from the remote controller through the communicator, when a mode of the powered-off display apparatus is changed to a standby mode and control content to be displayed on the display depending on control information received from the remote controller.

The display apparatus may further include a power supplier or supply, in which the controller may control the power supplier to supply power to the communicator in the standby mode.

The controller may perform a control to maintain a connection with the remote controller in the standby mode depending on the advertising packet received through the communicator.

The control information may include first control information including a packet according to a standard of Bluetooth low energy and the controller may control the main processor to be waked-up using the first control information.

According to another aspect of the present invention, a method for controlling a display apparatus includes: searching for a remote controller when an operation mode is changed to a standby mode in a powered-off display apparatus; receiving an advertising packet from the remote controller through a Bluetooth communicator; connecting the display apparatus with the remote controller depending on reception of the advertising packet; receiving control information from the remote controller in the display apparatus that is in the standby mode; and displaying content on a display depending on the reception of the control information.

According to still another aspect of the present invention, a remote controller includes: a sensor; a communicator connecting the remote controller with a display apparatus; and a controller controlling the sensor and the communicator, in which the controller may control the communicator to transmit an advertising packet for connection with the display apparatus to the display apparatus when the connection with the powered-off display apparatus ends, and control information corresponding to a user input detected by the sensor to be transmitted to the display apparatus that is in a standby mode through the communicator when the remote controller is connected with the display apparatus.

The present invention may provide the display apparatus and the method for controlling a display apparatus capable of controlling the screen of the display apparatus by the communicator and the sensor the remote controller.

The present invention may provide the display apparatus and the method for controlling a display apparatus capable of shortening a booting time of the display apparatus by the communicator and the sensor the remote controller.

The present invention may provide the display apparatus and the method for controlling a display apparatus capable of reducing power consumption of the display apparatus by the communicator and the sensor the remote controller.

The present invention may provide the remote controller capable of reducing power consumption of the display apparatus by the communicator and the sensor the remote controller.

According to an aspect of the present invention, a non-transitory computer readable medium storing a method for controlling a display apparatus, includes searching for a remote controller when an operation mode is changed to a standby mode in the display apparatus powered-off; receiving an advertising packet from the remote controller through a Bluetooth communicator; connecting the display apparatus with the remote controller depending on reception of the advertising packet; receiving control information from the remote controller in the display apparatus in the standby mode; and displaying content on a display depending on the reception of the control information.

According to an aspect of the present invention, a method of booting a display includes receiving, by the display, an advertising packet from a remote control while Bluetooth low energy scanning when in a standby mode; connecting to the remote control and receiving control information from the remote control; and waking the display and displaying content.

According to an aspect of the present invention, a method of booting a display by a remote control includes transmitting an advertising packet to the display when Bluetooth low energy scanning is detected; and transmitting, when connected to the display, control information for waking the display and causing the display to display content when user input is detected.

According to an aspect of the present invention, a system method for booting a display using a remote control includes transmitting an advertising packet by the remote control to the display when Bluetooth low energy scanning is detected; receiving, by the display, the advertising packet from the remote control while Bluetooth low energy scanning when in a standby mode; connecting by the display to the remote control; transmitting by the remote control, when connected to the display, control information for waking the display and causing the display to display content when user input is received; receiving, by the display, control information from the remote control; and awaking by the display and displaying the content.

According to an aspect of the present invention, a method includes switching a display to a low energy mode when the display is switched off; performing a Bluetooth low energy scan by the display; detecting the scan and transmitting an advertising packet by a remote control; connecting, when the advertising packet is received, the display and the remote control by the display; detecting a user input by the remote control; transmitting, when the input is received, control information to the display by the remote control; and waking up, when the control information is detected, and displaying content by the display.

According to an aspect of the present invention, a system, includes a display apparatus including a display; a display communicator connecting the display apparatus with a remote control; and a display controller computer controlling the display and the display communicator, where the display controller computer controls the display apparatus to be connected with the remote control depending on an advertising packet received from the remote control through the display communicator, when a mode of the display apparatus powered-off is changed to a standby mode, and controls content to be displayed on the display depending on control information received from the remote control; and the remote control including a sensor; a remote control communicator connecting the remote control with the display apparatus; and a remote control controller computer controlling the sensor and the remote control communicator, where the remote control controller computer controls the remote control communicator to transmit an advertising packet for connection with the display apparatus to the display apparatus when the connection with the apparatus powered-off ends, and controls control information corresponding to a user input detected by the sensor to be transmitted to the display apparatus in a standby mode through the remote control communicator when the remote control is connected with the display apparatus.

According to various exemplary embodiments of the present invention that are not limited to the foregoing, the display apparatus and the method for controlling a display apparatus capable of shortening the booting time of the display apparatus by the communicator and the sensor of the remote controller may be provided.

The above and/or other aspects of the embodiments will be more apparent by describing certain exemplary embodiments with reference to the accompanying drawings, in which:
FIG. 1 is a diagram schematically illustrating an operation between a display apparatus and a remote controller according to an exemplary embodiment of the present invention;
FIG. 2 is a block diagram illustrating the display apparatus and the remote controller according to the exemplary embodiment of the present invention;
FIG. 3 is a flow chart schematically illustrating a method for controlling a display apparatus according to an exemplary embodiment of the present invention;
FIG. 4 is a sequence diagram schematically illustrating the method for controlling a display apparatus according to the exemplary embodiment of the present invention;
FIGS. 5A to 5E are diagrams schematically illustrating an example of the method for controlling a display apparatus according to the exemplary embodiment of the present invention; and
FIG. 6 is a diagram schematically illustrating a Bluetooth packet format according to an exemplary embodiment of the present invention.

Reference will now be made in detail to the embodiments, examples of which are illustrated in the accompanying drawings, wherein like reference numerals refer to the like elements throughout. The embodiments are described below by referring to the figures.

Hereinafter, exemplary embodiments of the present invention will be described in detail with reference to the accompanying drawings. Further, a method for manufacturing and using a display apparatus and a method for controlling a display apparatus according to an exemplary embodiment of the present invention with reference to contents illustrated in the accompanying drawing will be described in detail. Like reference numerals or symbols of each drawing denote parts or components performing substantially the same functions.

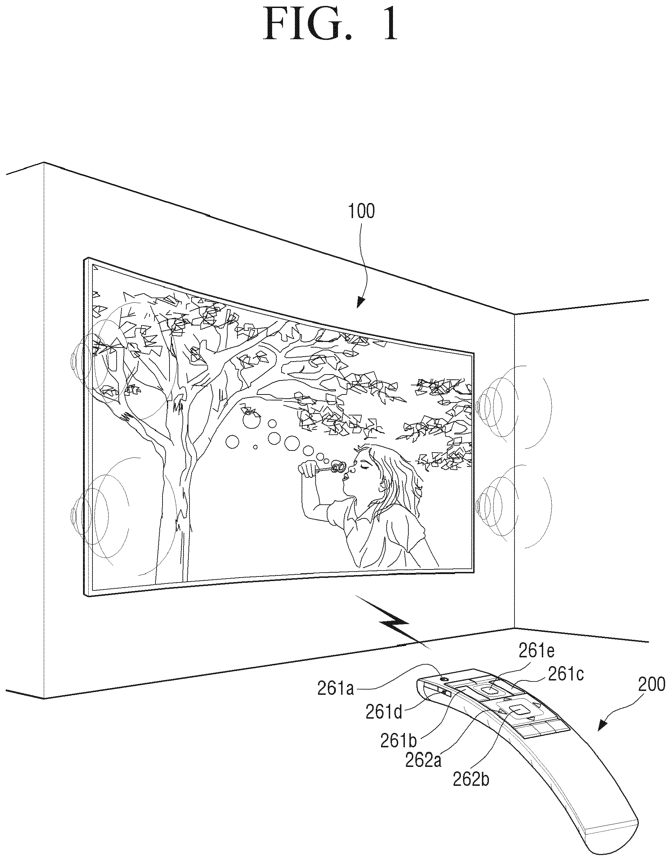

According to the present disclosure, a 'selection of a button (or key)' on a remote controller 200 (refer to FIG. 1) may be used as a term meaning a pressing of the button (or key) or a touch of the button (or key). Further, a 'user input' may be used as a term including, for example, a selection of a button (or key) of a user, a pressing of a button (or key) of a user, a touch of a button of a user, a touch gesture of a user, a voice of a user, a motion of a user, or a presence (for example, a user is presented within a recognition range of a camera) of a user.

According to the present disclosure, the 'touch (or including the touch gesture) of the button (or key) on the remote controller 200' may mean a touch (or including the touch gesture) input by a user's body or an input pen (for example, stylus (not illustrated)) in the button (or key) on the remote controller 200.

According to the present disclosure, the 'screen of the display apparatus' may be used as a meaning including a display of the display apparatus.

According to the present disclosure, 'a screen off of the display apparatus' may be used as the same meaning as a power off of the display apparatus. A plug of a power cable in the display apparatus of which the screen is off is connected with an outlet.

According to the present disclosure, 'content' may include, for example, video, image, text, or web document. The content may include a preset screen (for example, welcome screen, etc.) as well as a broadcast channel displayed on a display 170 of the display apparatus 100, moving pictures played by applications installed in the display apparatus 100, images displayed by applications, or web pages displayed by web browsers. Further, the content may be displayed on the display 170 in a normal mode or a pre-power on mode of the display apparatus 100.

Like reference numerals proposed in each drawing denote like components.

FIG. 1 is a diagram schematically illustrating an operation between a remote controller and a display apparatus according to an exemplary embodiment of the present disclosure.

FIG. 1 illustrates the display apparatus and the remote controller.

The remote controller 200 may transmit a control command through infrared or near field communication (for example, Bluetooth, etc.) to control the display apparatus 100.

A user may select a button (including a key) on the remote controller 200 or use various interaction schemes (for example, touch pad, voice recognition by a microphone, or motion recognition by a sensor) to control (for example, power on / off, booting, channel change, volume adjustment, content playing, etc.) the display apparatus 100. Further, a user may control (for example, power on / off, booting, channel change, volume adjustment, content playing, etc.) the display apparatus 100 based on the motion recognition by a camera 145 attached or separately formed in the display apparatus.

Alternatively, a user may use a motion (for example, contacting, gripping, or moving the remote controller 200) of the remote controller 200 to control the screen of the display apparatus 100. For example, a user may contact, grip, or move the remote controller 200 to control the screen of the powered-off display apparatus 100 to be operated (for example, screen on). Further, a user may use the motion of the remote controller 200 to control the screen of the powered-off display apparatus 100 to be partially operated (for example, to turn on a portion of the screen). In addition, various control operations may be performed.

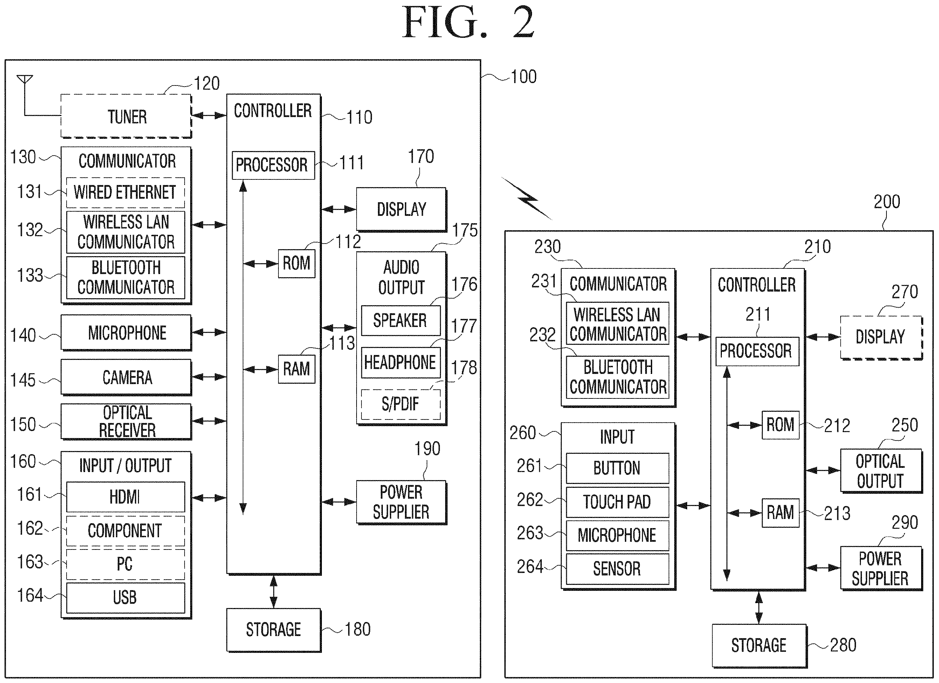

The display apparatus 100 may use the camera 145 (refer to FIG. 2) to detect the presence of the user. For example, in the display apparatus 100 of which the screen is off, the waked-up camera 145 may detect the presence or motion of the user, the motion or movement of the remote controller 200, etc.

Referring to FIG. 1, the remote controller 200 includes a button 261 (or including a key) corresponding to a function and / or operation of the display apparatus 100. The button 261 may include a physical button or a touch button. Further, the remote controller 200 may include, for example, single-function buttons 261a to 262b and / or multi-functional buttons (not illustrated) corresponding to functions executed by the display apparatus 100.

The single-functional buttons of the remote controller 200 may be used as a term designating a button corresponding to a control of one of a plurality of functions executed by the display apparatus 100.

The multi-functional buttons (for example, color button (not illustrated)) of the remote controller 200 may be used as a term designating a button corresponding to a control of additional functions differently provided (or set) according to the functions executed by the display apparatus 100. The multi-functional buttons may be represented by colors (for example, red, yellow, green, etc.) different from other buttons. The number of multi-functional buttons (not illustrated) may also be added, changed, or deleted to correspond to the functions of the display apparatus 100.

FIG. 2 is a block diagram illustrating the display apparatus and the remote controller according to the exemplary embodiment of the present invention.

Referring to FIG. 2, the display apparatus may receive control information from the remote controller 200. The display apparatus 100 may be connected with external electronic devices (not illustrated) in a wired or wireless manner through a communicator 130 or an input / output 160. An example of the external electronic devices may include a mobile phone (not illustrated), a smart phone (not illustrated), a tablet PC (not illustrated), a PC (not illustrated), and a server (not illustrated).

The display apparatus 100 may include the display 170 and additionally include one of a tuner 120, the communicator 130, and the input / output 160 or a combination of the tuner 120, the communicator 130, and the input / output 160. Further, the display apparatus 100 having the display 170 may be electrically connected with separate apparatuses (for example, set top box (not illustrated), etc.) having the tuner.

The display apparatus 100 may be implemented as, for example, an analog TV, a digital TV, a 3D-TV, a smart TV, an LED-TV, an OLED TV, a plasma TV, a monitor, a curved TV having a screen of a fixed curvature, a flexible TV having a screen of a fixed curvature, a bended TV having a screen of a fixed curvature, and / or a curvature variable TV having a current screen of a curvature that may be changed by a received user input, etc., but the fact that the display apparatus 100 is not limited thereto will be understood by those skilled in the art to which the present invention pertains.

The display apparatus 100 includes the tuner 120, the communicator 130, a microphone 140, the camera 145, an optical receiver 150, the input / output 160, the display 170, an audio output 175, storage 180, and a power supplier 190. The display apparatus 100 may include sensors (for example, illumination sensor, temperature sensor, etc., which are not illustrated) that detect an internal state or an external state of the display apparatus 100.

The controller 110 includes a computer of processor 111. Further, the controller 110 may further include a ROM (or non-volatile memory 112) in which a control program for controlling the display apparatus 110 is stored and a RAM (or volatile memory 113) in which signals or data input from the outside of the display apparatus 100 are stored or that is used as a storage area corresponding to various operations performed by the display apparatus 100.

The controller 110 serves to control a signal flow between the overall operation of the display apparatus 100 and the internal components 110 to 190 of the display apparatus 100 and process data. The controller 110 controls power supplied from the power supplier 190 to the internal components 110 to 190.

The processor 111 may include a graphic processing unit (not illustrated) for performing graphic processing corresponding on an image or video. The processor 111 may be implemented as a system on chip (SoC) including a core (not illustrated) and the GPU. Further, the processor 111 may also be implemented as the SoC including at least one of the ROM 112 and the RAM 113. The processor 111 may include a single core, a dual core, a triple core, a quad core, and a core of a multiple thereof.

The processor 111 may include a plurality of processors. The plurality of processors may include a main processor (not illustrated) operated in a pre-power on mode that is one of states of the display apparatus 100 and a normal mode displaying a broadcast screen and a sub processor (not illustrated) operated in a standby mode (for example, power off of the display apparatus and connection of a power plug to an outlet) that is one of states of another display apparatus 100. The pre-power on mode means a mode prepared to make the display apparatus available. In the pre-power on mode, the display apparatus 100 may be waked-up to perform a previous operation in order to display various contents.

The controller 110 including the main processor may be operated in the pre-power on mode and / or the normal mode. Further, the controller 110 including the sub processor may be operated in the standby mode.

The plurality of processors may further include a sensor processor (not illustrated) controlling a sensor (not illustrated). The processor 111, the ROM 112, and the RAM 113 may be connected with one another through an internal bus.

The controller 110 controls the display and the communicator, when the mode of the powered-off display apparatus is changed to the standby mode, controls the display apparatus to be connected with the remote controller depending on an advertising packet received from the remote controller through the communicator, and controls content to be displayed on the display depending on the control information received from the remote controller.

The display apparatus further includes the power supplier and the controller 110 may control the power supplier to supply power to the communicator in the standby mode.

The display apparatus further includes the power supplier and the controller 110 may control the power supplier to supply power to the display apparatus other than the display in the pre-power on mode.

The controller 110 may perform a control to maintain the connection with the remote controller in the standby mode depending on the advertising packet received through the communicator.

The control information includes first control information including a packet according to a standard of Bluetooth low energy and the controller 110 may control the main processor to be waked-up using the first control information.

The controller 110 includes the main processor and the sub processor and the communicator may be controlled by the sub processor in the standby mode.

The controller 110 may control the control information to be received through a Bluetooth communicator that is one of the communicators.

The controller 110 controls the advertising packet according to the standard of Bluetooth low energy including the first control information to be received by the communicator and the advertising packet may be a packet according to the standard of Bluetooth low energy.

The controller 110 controls the communicator to receive a packet including the second control information and the packet may be an HID packet according to the standard of Bluetooth low energy.

The display apparatus further includes the audio output and the power supplier and the controller 110 may control the power supplier not to supply power the audio output when the content is displayed on the display.

The controller 110 may control the power supplier to continuously supply power to the communicator in the standby mode.

The controller 110 includes the main processor and the sub processor and the communicator may be controlled by the sub processor in the standby mode.

The controller 110 may control the display to display content on some of the display in the pre-power on mode.

The controller 110 may control the pre-power on mode to return to the standby mode when there is no second control information for a set time in the pre-power on mode.

The control information includes the second control information including the packet according to the standard of Bluetooth low energy and the controller 110 may control the display apparatus to be changed to the normal mode depending on the second control information.

According to the exemplary embodiment of the present invention, the term "the controller of the display apparatus 100" includes the processor 111, the ROM 112, and the RAM 113 of the display apparatus 100.

The exemplary embodiment of the present invention illustrates and describes that the controller includes the processor 111, the ROM 112, and the RAM 113 of the display apparatus 100, but is not limited thereto. For example, the term "the controller of the display apparatus 100" may be used as a meaning including the main processor, the sub processor, the ROM 112, and the RAM 113 of the display apparatus 100. For example, the term "the controller of the display apparatus 100" may be used as a meaning including the sub processor, the ROM 112, and the RAM 113 of the display apparatus 100. For example, the controller of the display apparatus 100 may be used as a meaning including the main processor, the sub processor, the sensor processor, the ROM 112, and the RAM 113 of the display apparatus 100. Further, the controller may be implemented as the system on chip (SoC) or IC logic.

The fact that a configuration and an operation of the controller 110 may be variously implemented according to the exemplary embodiments will be easily understood by those skilled in the art to which the present invention pertains.

The tuner 120 may tune only a frequency of a channel that the display apparatus 100 intends to receive, among many radio wave components by amplifying, mixing, resonating, etc. broadcast signals received in a wired or wireless manner to select the broadcast signal. The broadcast signal includes video, audio, and additional data (for example, electronic program guide (EPG)).

The tuner 120 may receive video, audio, and data in a frequency band corresponding to a channel number (for example, cable broadcast channel No. 506) corresponding to a user input.

The tuner 120 may receive broadcast signals from various sources such as terrestrial broadcasting, cable broadcasting, and satellite broadcasting. The tuner 120 may also receive broadcasting signals from various sources such as analog broadcasting and digital broadcasting.

The tuner 120 may be implemented all-in-one with the display apparatus 100 or may be implemented as a separate apparatus (for example, set top box (not illustrated), tuner (not illustrated) connected with the input / output 160) having a tuner unit electrically connected with the display apparatus 110.

The communicator 130 may connect the display apparatus 100 with the remote controller 200 or the external apparatuses (not illustrated) by the control of the controller 110. Further, the communicator 130 may receive the control information corresponding to the control of the display apparatus 100 transmitted from the remote controller 200 by the control of the controller 110.

The communicator 130 may include one of a wired Ethernet 131, a wireless LAN communicator 132, and a Bluetooth communicator 133 depending on the performance and structure of the display apparatus 100. Further, the communicator 130 may include a combination of the wired Ethernet 131, the wireless LAN communicator 132, and the Bluetooth communicator 133. The Bluetooth communication is one of near field communications and may include a Bluetooth low energy (BLE) communication scheme. The communicator 130 may further include ultra-wideband (UWB) communication, near field communication (NFC), etc.

The Bluetooth communicator 133 is a configuration to perform the Bluetooth communication with the remote controller 200. The Bluetooth communicator 133 may receive the control information from the remote controller 200. The Bluetooth communicator 133 may include a Bluetooth processor (or referred to as a Bluetooth chip (not illustrated)). The Bluetooth communicator 133 may include a first storage (for example, ROM (not illustrated) including EEPROM) storing a Bluetooth processor and a Bluetooth profile.

The Bluetooth communicator 133 may include the Bluetooth processor, the first storage, and an antenna (not illustrated). Further, the Bluetooth communicator 133 may include the Bluetooth processor, the first storage (not illustrated), the antenna, and a filter (not illustrated) for noise filtering of a signal received through the antenna.

The Bluetooth processor may be a dual mode Bluetooth processor that supports Bluetooth classic before Bluetooth 4.0 and the Bluetooth low energy after the Bluetooth 4.0. The dual mode Bluetooth processor means a processor that may be selectively operated as one of the two modes. For example, the dual mode Bluetooth processor may be operated in a host controller interface (HCI) mode or a low energy mode.

The Bluetooth processor may be an HCI type dual mode Bluetooth processor that may communicate with the controller 110 of the display apparatus 100 when the display apparatus 100 is the normal mode. For example, the HCI type dual mode Bluetooth processor may communicate with a Bluetooth stack (not illustrated) that is software controlling the HCI type dual mode Bluetooth processor of the display apparatus 100 through the HCI.

The HCI type dual mode Bluetooth processor may communicate with the Bluetooth stack that is software controlling the HCI type dual mode Bluetooth processor in the display apparatus 100 by the control of the controller 110 through the HCI. By the communication with the Bluetooth stack, the HCI type dual mode Bluetooth processor may be operated. The Bluetooth stack may be executed by the controller 110. In the normal mode in which the display 170 is turned on, the controller 110 may execute the Bluetooth stack to interwork with the dual mode Bluetooth processor through the HCI of the Bluetooth communicator 133.

When the display apparatus 100 is the standby mode, the HCI type dual mode Bluetooth processor does not communicate with the controller 110 of the display apparatus 100. The HCI type dual mode Bluetooth processor does not communicate with the Bluetooth stack that is software controlling the HCI type dual mode Bluetooth processor in the display apparatus 100 by the control of the controller 110 through the HCI. When not communicating with the Bluetooth stack, the HCI type dual mode Bluetooth processor may be non-waked-up.

The Bluetooth communicator 133 according to the exemplary embodiment of the present invention may include a switching module (not illustrated). The switching module may switch the HCI mode corresponding to the display apparatus 100 that is in the normal mode and the low energy mode corresponding to the display apparatus 100 that is in the standby mode.

The switching module of the Bluetooth communicator 133 may be switched to the HCI mode corresponding to the display apparatus 100 that is in the normal mode and the low energy mode corresponding to the display apparatus 100 that is in the standby mode by the control of the controller 110.

The switching module may be implemented as software or hardware. Further, the switching module may also be implemented as a combination of the software and the hardware.

The Bluetooth communicator 133 according to the exemplary embodiment of the present invention may receive the control information transmitted from the remote controller 200 by the control of the controller 110. The Bluetooth communicator 133 may receive the advertising packet according to the standard of Bluetooth low energy (BLE) transmitted from the remote controller 200. Hereinafter, for convenience of explanation, the advertising packet according to the standard of Bluetooth low energy (BLE) is referred to 'advertising packet'.

The Bluetooth communicator 133 may receive the control information (for example, first control information) transmitted from the remote controller 200 as the packet according to the standard of the Bluetooth low energy (BLE). Hereinafter, for convenience of explanation, the packet according to the standard of Bluetooth low energy (BLE) is referred to 'packet'. The Bluetooth communicator 133 may receive the advertising packet and the packet transmitted from the remote controller 200.

The microphone 140 receives an uttered voice of a user. The microphone 140 may convert the received voice into an electrical signal and output the electric signal to the controller 110. The user voice may include, for example, a menu of the display apparatus 100 or a voice corresponding to the control of the function. The recognition range of the microphone 140 may be changed depending on a voice volume of a user and the surrounding environment (for example, speaker sound, surrounding noise).

The microphone 140 may be implemented all-in-one with the display apparatus 100 or separated from the display apparatus 100. The separated microphone 140 may be electrically connected with the display apparatus 100 through the communicator 130 or the input / output 160.

The camera 145 photographs video (for example, continued frame) in the recognition range of the camera. The photographed video may be used for user motion recognition. The user motion may include, for example, presence (for example, the user is presented within the recognition range of the camera) of a user, a portion of a user's body such as a face, an expression, a hand, a fist, a finger, etc., of a user, a motion of a portion of a user's body, etc. The recognition range of the camera 145 may be a distance ranging from 0.2 to 5 m from the camera 245 to a user.

The camera 145 may be configured of a lens (not illustrated) and an image sensor (not illustrated). The camera 145 may use a plurality of lenses and image processing to support an optical zoom or a digital zoom.

The camera 145 may be located at one of an upper end, a lower end, a left, and a right of the display apparatus 100. Further, the camera 145 may be located at one of an upper central area, a lower right area, a lower central area, and a lower left area.

The camera 145 according to the exemplary embodiment of the present invention may photograph a user (or motion of a user) even in the powered-off display apparatus (however, connection of the power plug with the outlet is needed) by the power supply of the power supplier 190.

When the number of cameras 145 is plural, a first camera (not illustrated) and a second camera (not illustrated) adjacent (for example, an interval between the first camera (not illustrated) and a separate second camera (not illustrated) is larger than 2 mm but smaller than 80 mm) thereto on the front surface of the display apparatus 100 may be used to receive a three-dimensional still image or a three-dimensional motion.

The camera 145 may be implemented all-in-one with the display apparatus 100 or separated from the display apparatus 100. The electronic device (not illustrated) including the separated camera (not illustrated) may be electrically connected with the display apparatus 100 through the communicator 130 or the input / output 160.

The optical receiver 150 receives an optical signal (including control information) output from the remote controller 200 through an optical window (not illustrated).

The optical receiver 150 may receive the optical signal corresponding to the user inputs (for example, touch, pressing, touch gesture, voice, or motion) from the remote controller 200. The control information may be extracted from the received optical signal. The received optical signal and / or the extracted control information may be transmitted to the controller 110.

The input / output 160 receives content from the outside of the display apparatus 100 by the control of the controller 110. The content may include, for example, video, image, text, or web document. Further, the content may also include the video including advertisement, the image including advertisement, or the web document including advertisement.

The input / output 160 may include one of a high-definition multimedia interface port 161 corresponding to the reception of content, a component input jack 162, a PC input port 163, and a USB input jack 164. The input / output 160 may include a combination of the HDMI input port 161, the component input jack 162, the PC input port 163, and the USB input jack 164. The fact that the input / output 160 is added, deleted, and / or changed depending on the performance and structure of the display apparatus 100 will be understood by those skilled in the art to which the present invention pertains.

The display 170 displays the video included in the broadcast signal received through the tuner 120 by the control of the controller 110. The display 170 may display content (for example, video) input through the communicator 130 or the input / output 260. The display 170 may output the content stored in the storage 180 by the control of the controller 110. Further, the display 170 may display a voice user interface (UI) for performing a voice recognition task corresponding to the voice recognition or a motion UI for performing a motion recognition task corresponding to the motion recognition. For example, the voice UI may include a voice command guide and the motion UI may include a motion command guide.

The screen of the display apparatus 100 according to the exemplary embodiment of the present invention may be used as a meaning including the display 170 of the display apparatus 100.

The display 170 according to the exemplary embodiment of the present invention may display a visual feedback corresponding to the reception of the first control information (or second control signal) received from the remote controller 200 by the control of the controller 110. The first control information or the second control signal may be interpreted as a meaning including a signal that is transmitted to transmit the first control information or the second control information.

The display 170 according to another exemplary embodiment of the present invention may be separated from the display apparatus 100. The display 170 may be electrically connected with the display apparatus 100 through the input / output 160 of the display apparatus 100.

The audio output 175 outputs the audio included in the broadcast signal received through the tuner 120 by the control of the controller 110. The audio output 175 may output audio (for example, corresponding to voice and sound) input through the communicator 130 or the input / output 160. Further, the audio output 175 may output an audio file stored in the storage 180 by the control of the controller 110.

The audio output 175 may include one of a speaker 176, a headphone output terminal 177, and an S / PDIF output terminal 178. Further, the audio output 175 may include a combination of the speaker 176, the headphone output terminal 177, and the S / PDIF output terminal 178.

The audio output 175 according to the exemplary embodiment of the present invention may output an auditory feedback corresponding to the reception of the first control information (or second control signal) received from the remote controller 200 by the control of the controller 110 of the display apparatus 100.

The storage 180 may store various data, programs, or applications for driving and controlling the display apparatus 100 by the control of the controller 110. The storage 180 may store signals or data that are input / output depending on the driving of the tuner 120, the communicator 130, the microphone 140, the camera 145, the optical receiver 150, the input / output 160, the display 170, the audio output 175, and the power supplier 190.

The storage 180 may store a control program for controlling the display apparatus 100 and the controller 110, applications first provided from manufacturers or downloaded from the outside, a graphical user interface (hereinafter, referred to as GUI) associated with the applications, objects (for example, image text, icon, button, etc.) for providing the GUI, user information, document, databases, or related data.

The storage 180 may include a broadcast receive module, a channel control module, a volume control module, a communication control module, a voice recognition module, a motion recognition module, an optical receive module, a display control module, an audio control module, an external input control module, a power control module, a voice database (DB), or a motion database (DB) all of which are not illustrated. The modules and the databases (not illustrated) of the storage may be implemented in a software form for performing a broadcast receive control function, a channel control function, a volume control function, a communication control function, a voice recognition function, a motion recognition function, an optical receive control function, a display control function, an audio control function, an external input control function, or a power control function in the display apparatus 100. The controller 110 may use the software stored in the storage 280 to perform the function of the display apparatus 100.

The storage 180 may store display apparatus information or remote controller information.

The storage 180 may store the first control information received from the remote controller 200.

The storage 180 may store the second control information received from the remote controller 200.

The storage 180 may store the moving pictures, the image, or the text corresponding to the visual feedback.

The storage 180 may store the sound corresponding to the auditory feedback.

The storage 180 may store a feedback providing time (for example, 300 ms) of the feedback provided to a user.

According to the exemplary embodiment of the present invention, the term 'the storage' may be used as a term including the storage 180, the storage (not illustrated) including the ROM 112, the RAM, and the SoC (not illustrated) of the controller 110, a memory card (for example, micro SD card and USB memory, which are not illustrated) installed in the display apparatus 100, and an external storage (for example, USB memory, etc., which are not illustrated) connectable with the USB 164 port of the input / output 160. Further, the storage may include a non-volatile memory, a volatile memory, a hard disk drive (HDD), or a solid state driver (SSD).

The power supplier 190 supplies power input from an external power source to the components 110 to 190 in the display apparatus 100 by the control of the controller 110. The power supplier 290 may supply power input from at least one battery (not illustrated) located in the display apparatus 100 to the components 110 to 190 in the display apparatus 100 by the control of the controller 110.

The power supplier 190 may include a first power supplier (not illustrated) supplying power to the communicator 130 of the powered-off display apparatus 100 (or screen off of the display apparatus 100 is off, connection of the power plug with the outlet). The power supplier 190 may also include a first power supplier (not illustrated) that supplies power to a Bluetooth communicator 133 of the powered-off display apparatus 100 and the sub processor (not illustrated) controlling the Bluetooth communicator 133. Alternatively, the power supplier 190 may also include the first power supplier (not illustrated) that supplies power to the camera 145 of the powered-off display apparatus 100 (however, connection of the power plug with the outlet) and the sensor processor (not illustrated) controlling the camera 145.

The power supplier 190 may include a battery (not illustrated) that supplies power to the Bluetooth communicator 133 of the powered-off display apparatus 100 (however, connection of the power plug with the outlet).

At least one of, for example, components 110 to 190 included in the display apparatus 100 of FIGS. 1 and 2 may be added, changed, or deleted (for example, at least one of boxes illustrated by a dotted line) according to the performance and / or kind of the display apparatus 100. Further, the fact that the locations of the components (for example, 110 to 190) may be changed according to the performance or structure of the display apparatus 100 will be easily understood by those skilled in the art to which the present invention pertains.

Hereinafter, for example, the case of controlling the screen of the display apparatus will be described in detail.

Referring to FIG. 2, the remote controller 200 remotely controlling the display apparatus 100 includes a controller 210, a communicator 230, an input 260, an optical output 250, a display 270, storage 280, and a power supplier 290. The remote controller 200 may include one of the communicator 230 and the optical output 250 or both of the communicator 230 and the optical output 250.

The remote controller 200 may be used as a meaning designating the apparatus that may control the display apparatus 100. Further, the remote controller 200 may include an apparatus that may install (further, downloadable from the outside) applications for controlling the display apparatus 100.

The electronic device that may install the applications (not illustrated) for controlling the display apparatus 100 may have the display (for example, having only a display panel without a touch screen or a touch panel). The electronic device having the display may include a mobile phone (not illustrated), a smart phone (not illustrated), a tablet PC (not illustrated), a note PC (not illustrated), other display apparatuses (not illustrated), or home appliances (for example, refrigerator, washing machine, cleaner, etc.). A user may use functional buttons (for example, channel button (not illustrated)) in the graphical user interface (GUI (not illustrated)) provided from the executed applications to control the display apparatus 100.

The controller 210 includes a computer or processor 211. The controller 210 may further include a ROM (or non-volatile member 212) in which a control program for controlling the remote controller 200 is stored and a RAM (or volatile memory 213) in which signals or data input from the outside of the remote controller 200 are stored or that is used as a storage area corresponding to various operations performed by the remote controller 200.

The controller 210 performs functions of controlling the overall operation of the remote controller 200 and a signal flow between the internal components 220 to 290 and processing data. The controller 210 uses the power supplier 290 to control the supply of power to the internal components 220 to 290.

The controller 210 controls a sensor detecting a first user input and the communicator, when the connection with the display apparatus ends corresponding to the change to the standby mode of the display apparatus, controls the advertising packet for connection with the display apparatus to be transmitted to the display apparatus through the communicator, and controls the first control information corresponding to the detected first user input to be transmitted to the display apparatus that is in the standby mode through the communicator.

The controller 210 may control the advertising packet that is a packet according to the standard of the Bluetooth low energy to be transmitted to the display apparatus through the communicator.

The controller 210 may provide one of the auditory feedback and haptic feedback depending on the transmission of the first control information.

According to the exemplary embodiment of the present invention, the term the controller of the remote controller 200 includes the processor 111, the ROM 112, and the RAM 113 of the remote controller 200.

The communicator 230 may be wirelessly connected with the display apparatus 100 by the control of the controller 210. The communicator 230 may transmit the control information (for example, control information corresponding to power on, control information corresponding to the motion of the remote controller, etc.) corresponding to the user inputs (for example, touch, pressing, touch gesture, voice, or motion) to the display apparatus 100 by the control of the controller 210.

The communicator 230 may include at least one (for example, one of a wireless LAN communicator 231 and a Bluetooth communicator 232 or both of the wireless LAN communicator 231 and the Bluetooth communicator 232) of the wireless LAN communicator 231 and the Bluetooth communicator 232.

The wireless LAN communicator 231 may be wirelessly connected with an access point (AP) at a location where the AP is installed by the control of the controller 210. The wireless LAN communicator 231 may include, for example, Wi-Fi. The wireless LAN communicator 231 supports wireless LAN standard (IEEE 802.11x) of Institute of Electrical and Electronics Engineers (IEEE).

The Bluetooth communicator 232 may wirelessly perform near field communication between the remote controller 200 and the display apparatus 100 without the AP by the control of the controller 210.

The Bluetooth communicator 232 may transmit the control information transmitted to the display apparatus 100 as the Bluetooth packets (for example, one of the Bluetooth classic packet and the Bluetooth low energy packet).

The Bluetooth communicator 232 may transmit the control information transmitted to the display apparatus 100 as a BLE advertising packet. Further, the Bluetooth communicator 232 may transmit the control information (for example, second control information) transmitted to the display apparatus 100 in the HID packet form.

The Bluetooth communicator 232 may transmit the first control information and the second control information transmitted to the display apparatus 100 as other packets (for example, BLE advertising packet and BLE packet).

FIG. 2 illustrates only the Bluetooth communicator 232. In addition, however, the near field communication may include infrared data association (IrDA), ultra-wideband (UWB) communication, near field communication (NFC), etc.

The optical output 250 outputs the optical signal (for example, including the control information) corresponding to the user inputs (for example, touch, pressing, touch gesture, voice, or motion) by the control of the controller 210. The output optical signal may be received by the optical receiver 150 of the display apparatus 100. A remote control code format used in the remote controller 200 may use one of a manufacturer only remote control code format and a commercial remote control code format. The remote control code format may include a leader code and a data word. The output optical signal may be modulated into a carrier wave and output. The control information may be stored in the storage 280 or may also be generated by the controller 210. The remote controller 200 may include an infrared-laser emitting diode (IR-LED).

The remote controller 200 may include one or both of the communicator 230 and the optical output 250 that may transmit the control information to the display apparatus 100.

The controller 210 may output the control information corresponding to the user input to the display apparatus 100 through one of the communicator 230 and the optical output 250. Further, the controller 210 may output the control information corresponding to the motion of the remote controller 100 to the display apparatus 100 through one of the communicator 230 and the optical output 250.

The controller 210 may preferentially transmit the control information corresponding to the user input and / or the control information corresponding to the motion of the remote controller 200 to the display apparatus 100 through one (for example, communicator 230) of the communicator 230 and the optical output 250.

The input 260 may include a button 261 or a touch pad 262 that receives the user input (for example, touch or pressing) for controlling the display apparatus 100. The input 260 may include a microphone 263 receiving uttered user voice that is one of the user inputs, a sensor 264 detecting the motion of the remote controller 200 that moves by the other of the user inputs, or a vibration motor (not illustrated) providing the haptic feedback.

The input 260 may output an electrical signal (for example, analog signal or digital signal) corresponding to the received user inputs (for example, touch, pressing, touch gesture, voice, or motion) to the controller 210.

The button 261 may include buttons 261a to 261e of FIG. 1. The touch pad 262 may receive the touch of the user or the touch gesture of the user.

The touch pad 262 may be implemented as a direction button 262a and an enter button 262b. Further, the touch pad 262 may also be located on the front surface of the remote controller 200 on which the buttons 261a to 261e are not located.

The microphone 263 receives the uttered voice of a user. The microphone 263 may convert the received voice into an electrical signal and output the electric signal to the controller 210.

The sensor 264 may detect the internal state and / or the external state of the remote controller 200. The sensor 264 may include, for example, a motion sensor (not illustrated) detecting the motion of the remote controller 200, a gyro sensor (not illustrated) detecting a direction using a rotational inertia of the remote controller 200, an accelerator sensor (not illustrated) detecting a 3-axis (for example, X axis, Y axis, and Z axis) acceleration applied to the remote controller 200, or a gravity sensor (not illustrated) detecting a direction of gravity. The sensor 264 may measure movement acceleration or gravitational acceleration of the remote controller 200, respectively.

The sensor 264 may include a force sensor (not illustrated) or a pressure sensor (not illustrated) detecting a contact of a user to the surface of the remote controller 200 or gripping of a user on the remote controller. Further, the sensor 264 may include a grip sensor (not illustrated) detecting the gripping of the user on the remote controller 200.

The sensor 264 according to the exemplary embodiment of the present invention may detect the motion (or acceleration) of the remote controller 200 by the first user input of the user. Further, the sensor 264 may detect the contact to the remote controller 200 by the first user input of the user or the gripping on the remote controller 200. The controller 210 may generate the control signal corresponding to the motion of the remote controller 200 and transmit the generated control signal to the display apparatus 100 through the communicator 230. Further, the controller 210 may generate the control signal corresponding to the contact of the user or the gripping of the user and transmit the generated control signal to the display apparatus 100 through the communicator 230.

A vibration motor (not illustrated) may convert the electrical signal into mechanical vibration by the control of the controller 210. For example, the vibration motor (not illustrated) may include a linear vibration motor, a bar type vibration motor, a coin type vibration motor, or a piezoelectric element vibration motor. The vibration motor (not illustrated) may be located inside the remote controller 200 in one or plural. Further, the vibration motor (not illustrated) may vibrate the whole of the remote controller 200 or vibrate only some of the remote controller 200.

According to the exemplary embodiment of the present invention, the vibration motor (not illustrated) may output the haptic feedback corresponding to the transmission of the control information by the control of the controller 210. The vibration motor (not illustrated) may provide various haptic feedbacks (for example, vibration intensity and vibration duration corresponding to various haptic patterns) stored in the storage 280 based on the control information transmitted by the controller 210.

The display 270 may include displays such as a liquid crystal display (LCD) type, an organic light emitting diodes (OLED) type, a plasma display panel (PDP) type, and a vacuum fluorescent display (VFD) type.

The display 270 may display a broadcast channel number, a broadcast channel name, and / or a state (for example, screen of, pre-power on mode and / or normal mode) of the display apparatus, etc., on the display apparatus 100.

When the remote controller 200 and the display apparatus 100 are connected with each other by the Bluetooth communication, the display 270 may display a text called, for example, 'BT connected' by the control of the controller 210.

When the optical signal is output from the remote controller 200 to the display apparatus 100, the display 270 may display, for example, a text, an icon, or a symbol that corresponds to 'TV on' turning on the power supply of the display apparatus 100, 'TV off turning off the power supply of the display apparatus 100, 'Ch on' displaying a selected channel number, and a 'Vol value' representing the adjusted volume by the control of the controller 210.

The storage 280 may store various data, programs, or applications for driving and controlling the remote controller 200 by the control of the controller 210. The storage 280 may store signals or data that are input or output depending on the driving of the communicator 230, the optical output 250, and the power supplier 290.

The storage 280 may store the control information corresponding to the received user inputs (for example, touch, pressing, touch gesture, voice, or motion) and / or the control information corresponding to the motion of the remote controller 200, by the control of the controller 210.

The storage 280 may store the remote controller information corresponding to the remote controller 200. The remote controller information may include a model name, a unique device ID, a memory remaining quantity, whether there is an object data, a Bluetooth version, or a Bluetooth profile.

The storage 280 may store the first control information corresponding to the first user input transmitted to the display apparatus 100.

The storage 280 may store the second control information corresponding to the selection (for example, second user input) of a channel change button 261c transmitted to the display apparatus 100.

The storage 280 may store one haptic pattern or more than two haptic patterns. The haptic pattern may be represented as a waveform. In the haptic pattern, for example, a vibration time (for example, 50 ms in unit) of the vibration motor (not illustrated) may be represented on a horizontal axis and vibration intensity (for example, 500 mV in unit) of the vibration motor (not illustrated) may be represented on a vertical axis (not illustrated). A first haptic pattern may be a vibration which is in the state in which the vibration intensity is gradually increased from 0 V to 800 mV, gradually decreased to 100 mV, and then increased again is repeated. Further, an acceleration section and a deceleration section may be symmetrical to each other.

When a plurality of haptic patterns is stored in the storage 280, one of the plurality of haptic patterns may be set as a favorite haptic pattern by the setting. When the favorite haptic pattern is set, the controller 210 may preferentially provide the favorite haptic pattern as the haptic feedback through the vibration motor (not illustrated).

The fact that the haptic pattern may be added, changed, or deleted depending on the function or structure of the remote controller 200 will be easily understood by those skilled in the art to which the present invention pertains.

The power supplier 290 supplies power to the components 210 to 290 of the remote controller 200 by the control of the controller 210. The power supplier 290 may supply power to the components 210 to 290 from one battery or more than two batteries (not illustrated) that are located in the remote controller 200. The battery may be located in a space between the surface (for example, the button 261 or the touch pad 262 is present) and the back surface (not illustrated) of the remote controller 200.

At least one of the components illustrated in the remote controller 200 of FIGS. 1 and 2 may be added or deleted (for example, at least one of the boxes illustrated by a dotted line) corresponding to the performance of the remote controller 200. Further, the fact that the locations of the components may be changed depending on the performance or structure of the remote controller 200 will be easily understood by those skilled in the art to which the present invention pertains.

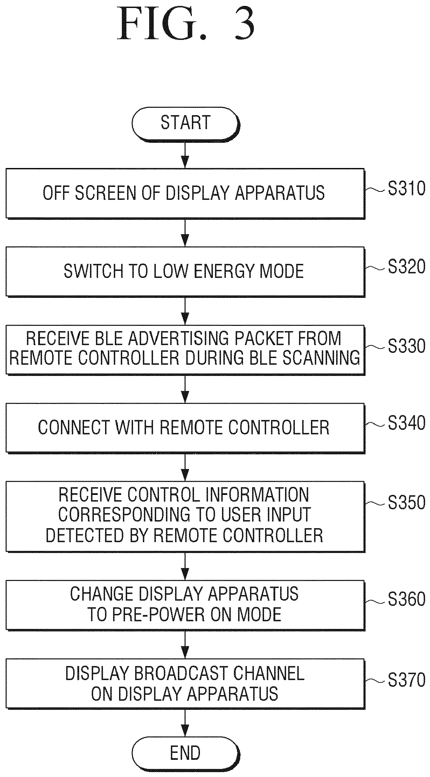

FIG. 3 is a flow chart schematically illustrating a method for controlling a display apparatus according to an exemplary embodiment of the present invention.

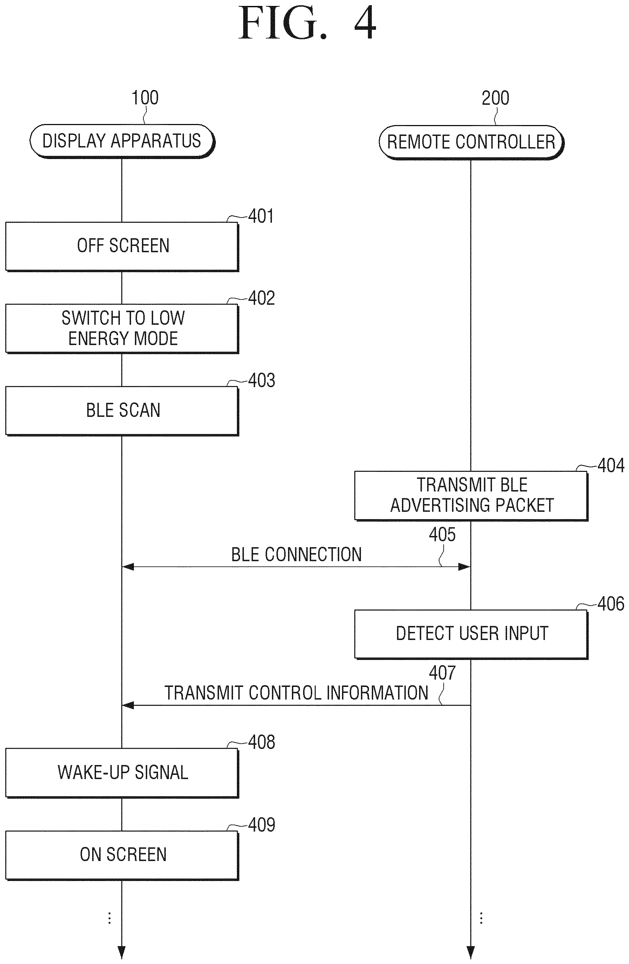

FIG. 4 is a sequence diagram schematically illustrating the method for controlling a display apparatus according to the exemplary embodiment of the present invention.

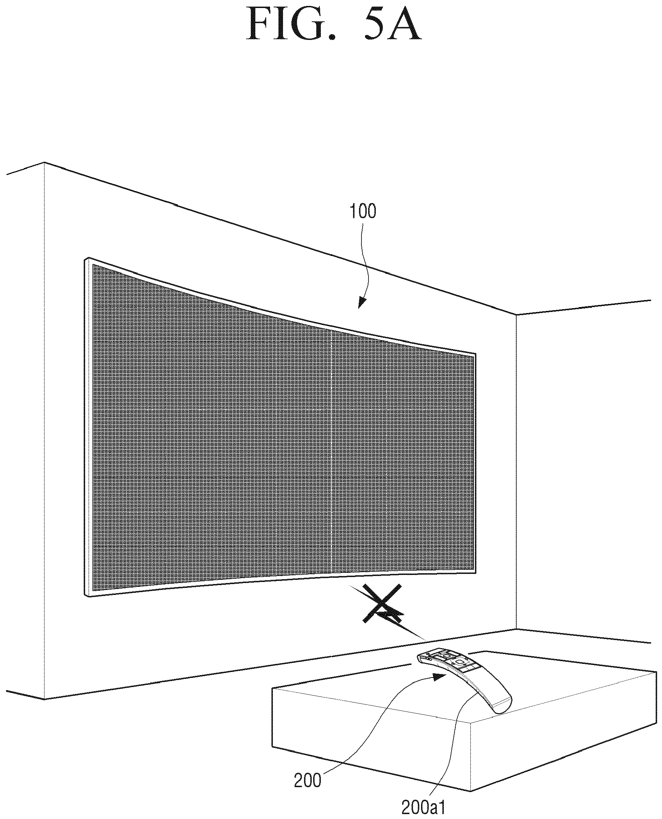

FIGS. 5A to 5E are diagrams schematically illustrating an example of the method for controlling a display apparatus according to the exemplary embodiment of the present invention.

In step S310 of FIG. 3, the screen of the display apparatus is off.

Referring to FIGS. 4 and 5A, the screen of the display apparatus is off (401).

The display apparatus 100 and the remote controller 200 are connected with each other by the Bluetooth communication (for example, including a Bluetooth low energy communication scheme) The connection of the display apparatus 100 with the remote controller 200 by the Bluetooth communication may be easily understood by those skilled in the art to which the present invention pertains.

The screen of the display apparatus 100 may be off. The screen of the display apparatus 100 may be off by an input of a power button 261a of the remote controller 200 or an input of a panel key (not illustrated) of the display apparatus 100.

The panel key (not illustrated) may be located at a front surface, a side surface, or a back surface (for example, surface of a bottom chassis) of the display apparatus 100. The panel key (not illustrated) may be a physical key or a touch key.

Even after the screen of the display apparatus 100 is off, the display apparatus 100 may be connected with an external outlet through the plug of the power cable.

When the control information corresponding to the off of the display 170 is received by the display apparatus 100, the controller 110 may turn off the display 170. For example, the controller 110 may transmit a content output off signal to the display 170, cut off power supplied to the display 170, or transmit a power off signal of the display apparatus 100 to the power supplier 190.

The display 170 is turned off by the control of the controller 110.

When the control information corresponding to the off of the display 170 is received by the display apparatus 100, the controller 110 may transmit a screen off signal to the display 170 playing content 500. The display 170 may stop playing the content depending on the screen off signal.

When the control information corresponding to the off of the display 170 is received by the display apparatus 100, the controller 110 may control the power supplier 190 to cut off the supply of power to the display 170.

When the control information corresponding to the off of the display 170 is received by the display apparatus 100, the supply of power to most of the internal components of the display apparatus 100 may stop. Further, when the screen of the display apparatus 100 is off, power may be continuously supplied to some of the components.

Referring to FIG. 5A, the remote controller 200 that may control the display apparatus 100 of which the screen is off may be located near (for example, location at which the near field communication may be implemented) the display apparatus 100.

In step S320 of FIG. 3, the HCI mode is switched to a low energy mode.

When the control information corresponding to the off of the display 170 is received by the display apparatus 100, the display apparatus 100 is switched (or changed) from the normal mode to the standby mode. The Bluetooth communicator 133 is switched from the HCI mode (corresponding to the normal mode of the display apparatus 100, host controller interface mode) to the low energy mode (corresponding to the standby mode of the display apparatus 100, low energy mode) depending on the mode switching of the display apparatus 100 (402).

When the display apparatus 100 is switched from the normal mode to the standby mode, power may be supplied to the sub processor (not illustrated). When the display apparatus 100 is switched from the normal mode to the standby mode, power may not be supplied to the main processor (not illustrated).

When the display 170 is off, power may be continuously supplied to the communicator 130. Further, when the display 170 is off, the controller 110 (or sub processor) may control the power supplier 190 to continuously supply power to the Bluetooth communicator 133.

The fact that after the display apparatus 100 is changed from the normal mode to the standby mode, the controller 110 may turn off the display 170 will be easily understood by those skilled in the art to which the present invention pertains.

When the display apparatus 100 is switched from the normal mode to the standby mode, the controller 110 (or sub processor) my control the Bluetooth communicator 133 to be switched from the HCI mode to the low energy mode depending on the standby mode switching of the display apparatus 100.

The Bluetooth processor of the Bluetooth communicator 133 may be operated in the HCI mode corresponding to the normal mode of the display apparatus 100 and the low energy mode corresponding to the standby mode of the display apparatus 100, respectively.

The Bluetooth communicator 133 may receive a low energy control signal corresponding to the mode switching (for example, switched from the HCI mode to the low energy mode) of the display apparatus 100 from the controller 110 through the host controller interface (HCI).

The Bluetooth processor (or Bluetooth communicator 133) may store the low energy control information corresponding to the low energy control signal in the first storage (not illustrated). The stored low energy control information may include a low energy control information identifier (ID) for history management, a low energy signal receiving time, etc.

The Bluetooth communicator 133 is switched from the HCI mode to the low energy mode by the control of the Bluetooth processor depending on the reception of the low energy control signal.

The Bluetooth processor may store the low energy mode change information in the first storage (not illustrated) depending on the low energy mode switching. The stored low energy mode change information may include the low energy mode change information identifier (ID) for history management and a low mode change time.

When the display 170 is turned off, the first power supplier may continuously supply power to the Bluetooth communicator 133 by the control of the controller 110 (or sub processor). When the display 170 of the display apparatus 100 is turned off, the Bluetooth communicator 133 to which power is supplied is in a waked-up.

In step S330 of FIG. 3, the BLE advertising packet is received from the remote controller during BLE scanning.

The BLE advertising packet transmitted from the remote controller 200 is received by the Bluetooth communicator 133 during the BLE scanning (403, 404).

When the display apparatus 100 is switched from the normal mode to the standby mode, the connection of the Bluetooth communicator 133 of the display apparatus 100 with the Bluetooth communicator 232 of the remote controller 200 ends.

The Bluetooth communicator 232 of the remote controller 200 may be switched to the advertising state depending on the connection ending with the display apparatus 100. The Bluetooth communicator 232 of the remote controller 200 may be switched to the advertising state from the connection state through the standby state depending on the connection ending with the display apparatus 100.

The Bluetooth communicator 232 of the remote controller 200 may transmit the BLE advertising packet. The Bluetooth communicator 232 of the remote controller 200 may periodically (for example, range between 20 ms to 10.24 s) transmit the BLE advertising packet.

When the connection with the display apparatus 100 ends, the Bluetooth communicator 232 of the remote controller 200 may support a re-connectable state with the display apparatus 100. When there is the connection history between the display apparatus 100 and the remote controller 200 through the Bluetooth, the display apparatus 100 and the remote controller 200 need to be reconnected for mutual data communication.

In the display apparatus 100 of which the screen is off, the Bluetooth communicator 133 may be switched from the connection state to a scanning state depending on the switching to the low power mode.

The Bluetooth communicator 133 switched to the scanning state may receive the BLE advertising packet transmitted from the Bluetooth communicator 232 of the remote controller 200.

The Bluetooth communicator 133 switched to the scanning state may receive the BLE advertising packet transmitted from the Bluetooth communicator 232 of the remote controller 200. The received BLE advertising packet may be stored in the first storage (not illustrated).

The switching from the connection state of the Bluetooth communicator 133 to the scanning state in the display apparatus 100 may be faster than the switching from the connection state of the Bluetooth communicator 232 to the advertising state in the remote controller 200.

In step S340 of FIG. 3, the display apparatus is connected with the remote controller.

The Bluetooth communicator 133 of the display apparatus 100 may use the received BLE advertising packet to be connected with the Bluetooth communicator 232 of the remote controller 200 (405). The Bluetooth communicator 133 that is in the low energy mode may maintain the connection state with the Bluetooth communicator 232 of the remote controller 200.

The Bluetooth communicator 133 and the Bluetooth communicator 232 of the remote controller 200 may be synchronized. The synchronized Bluetooth communicator 133 and the Bluetooth communicator 232 of the remote controller 200 may shortly open (for example, enough not to end the connection between the Bluetooth communicator 133 and the Bluetooth communicator 232 of the remote controller 200) a transmit window in an interval section (for example, range between 1.25 ms to 10 ms) to maintain the communication connection.

The display apparatus 100 may more save power consumption by about 20 mW than before (for example, reconnection process between the Bluetooth communicator 133 of the display apparatus 100 with the connection history and the Bluetooth communicator 232 of the remote controller 200) by the synchronized connection maintenance between the Bluetooth communicator 133 and the Bluetooth communicator 232 of the remote controller 200. For example, about 20 mW may mean 15 mW or more.

When the Bluetooth communicator 133 and the Bluetooth communicator 232 of the remote controller 200 are synchronized, the display apparatus 100 may maintain the communication connection without large power consumption by the synchronization with the remote controller 200.

The remote controller 200 as well as the display apparatus 100 may more save power consumption by about 20 mW than before (for example, reconnection process between the Bluetooth communicator 133 of the display apparatus 100 with the connection history and the Bluetooth communicator 232 of the remote controller 200). For example, about 20 mW may mean 15 mW or more. As a result, the consumption of the battery of the remote controller 200 may be saved.

In step S350 of FIG. 3, the first control information corresponding to the first user input detected by the remote controller is received.

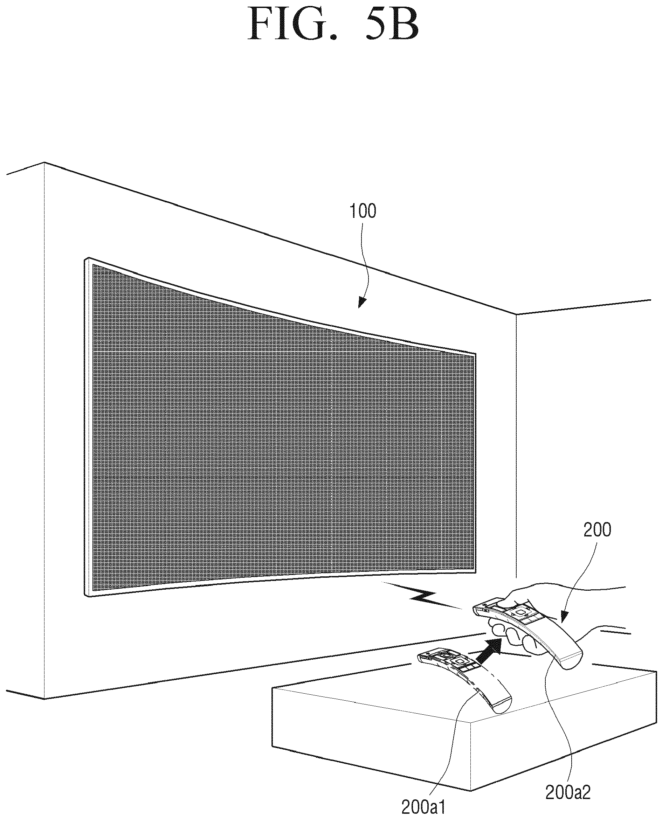

Referring to FIGS. 4 and 5B, the remote controller 200 detects the first user input (406).

The user may contact the remote controller 200 located near the display apparatus 100. The user may grip the remote controller 200 located near (for example, first location 200a1) the display apparatus 100. Further, the user may move the remote controller 200 located near (for example, first location 200a1) the display apparatus 100 to another location.

The remote controller 200 may detect the first user input (for example, contact, grip, and move the remote controller 200 or input the button) by the sensor 264.

When the first user input contacts the remote controller 200, the controller 210 may detect the contact of the user using a force sensor (or pressure sensor (not illustrated)) that is one of the sensors 264, or a touch sensor etc.

The sensor (not illustrated) detecting the contact of the user may be located on at least one of the front surface, the side surface, and the back surface of the remote controller 200. At least one or two sensors (not illustrated) detecting the contact of the user may be located on at least one of the front surface, the side surface, and the back surface of the remote controller 200. Further, when the display 270 of the remote controller 200 is a touch screen, the controller 210 may also detect the contact of the user through the touch screen.

When the first user input is the gripping on the remote controller 200, the controller 210 may detect the gripping of the user using the force sensor (or pressure sensor (not illustrated)) that is one of the sensors 264. The force sensor (or pressure sensor) detecting the gripping of the user may be located on at least one of the front surface, the side surface, and the back surface of the remote controller 200. At least one or two force sensors (or pressure sensor) detecting the gripping of the user may be located on at least one of the front surface, the side surface, and the back surface of the remote controller 200.

The remote controller 200 gripped by the user may move. For example, the user may tilt or rotate the gripped remote controller 200. Further, the user may move the gripped remote controller 200 fro the first location 200a1 to a second location 200a2.

The controller 210 of the remote controller 200 may detect the motion (for example, rotation, tilt, movement, etc.) of the remote controller 200. The motion of the remote controller 200 is detected by the sensor 264. For example, the motion of the remote controller 200 may be detected by a motion sensor (not illustrated), an accelerator sensor (not illustrated), a geomagnetic sensor (not illustrated), or a gyro sensor (not illustrated).

The motion of the remote controller 200 may be periodically (for example, resolution of the sensor or set detection time interval of the sensor) detected by the sensor 264.

The sensor 264 may output an analog signal corresponding to the first user input to the controller 210. Further, the analog signal output from the sensor 264 is converted into the digital signal by a converter (not illustrated), which may be in turn output to the controller 210.

The controller 210 of the remote controller 200 may analyze the electrical signal (for example, analog signal or digital signal) received from the sensor 264 to determine the contact and / or gripping of the remote controller 200. Further, the controller 210 of the remote controller 200 may analyze the signal (for example, analog signal or digital signal) received from the sensor 264 to determine (for example, change in moving distance, moving speed, or an acceleration, etc.) the motion of the remote controller 200.

The storage 280 may store the analog signal or the digital signal received from the sensor 264 by the control of the controller 210. Hereinafter, the stored analog signal or digital signal is called 'remote controller detection information'. The stored remote controller detection information may include the remote controller detection information identifier (ID) for history management, a sensor identifier (ID), a detected accelerator (for example, 2-axis or 3-axis) value of the remote controller 200, the moving detection time of the remote controller 200, the moving distance of the remote controller 200, the contact detection time of the remote controller 200, or the gripping detection time of the remote controller 200, etc.

The remote controller detection information may be periodically stored, starting from the first location 200a1 of the remote controller 200 until reaching the second location 200a2. The remote controller detection information may be a set of the remote controller detection information stored corresponding to the sensor resolution and / or the detection time interval of the set sensor.

The controller 210 may use the remote controller detection information to generate the first control information transmitted to the display apparatus 100. The controller 210 may use the periodically stored remote controller detection information to generate the first control information. Further, the controller 210 may load the first control information stored in the storage 280 or select the first control information from the plurality of stored control information, depending on the detection of the first user input. The first control information may be control information corresponding to the change of the display apparatus 100 from the standby mode to the pre-power on mode. The description of the pre-power on mode will be described below.

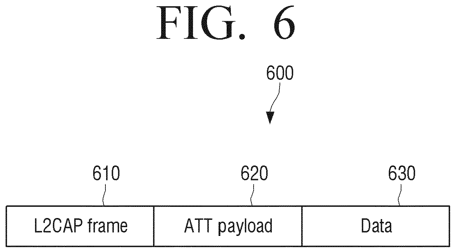

FIG. 6 is a diagram schematically illustrating a Bluetooth packet format according to an exemplary embodiment of the present invention.

Referring to FIGS. 4 and 5B, the controller 210 may transmit the first control information to the display apparatus 100 (407).

The controller 210 may transmit the first control information to the display apparatus 100 through the communicator 230. The controller 210 may transmit the first control information to the display apparatus 100 through the Bluetooth communicator 232 in the human interface device (HID) packet form.

The controller 210 of the remote controller 200 may transmit the first control information to the display apparatus 100 in an HID packet 600 (FIG. 6) form.

The HID packet may include a logical link control and adaptation layer protocol 610 (hereinafter, referred to as 'L2CAP') that is 4 bytes, an attribute protocol (ATT) payload 620 that is 3 bytes, and a data 830 that is 8 bytes.

The first control information transmitted from the remote controller 200 may be included in the data 630. The data 630 may be changed depending on the user input (for example, contact, gripping, or movement, or button input).

The controller 210 may periodically transmit the first control information to the display apparatus 100 through the Bluetooth communicator 232.

The communicator 130 of the display apparatus 100 may receive the HID packet including the first control information from the remote controller 200 by the control of the controller 110. The received first control information may be stored in the storage 180 by the control of the controller 110.

In step S360 of FIG. 3, the display apparatus is changed to the pre-power on mode depending on the first control information.

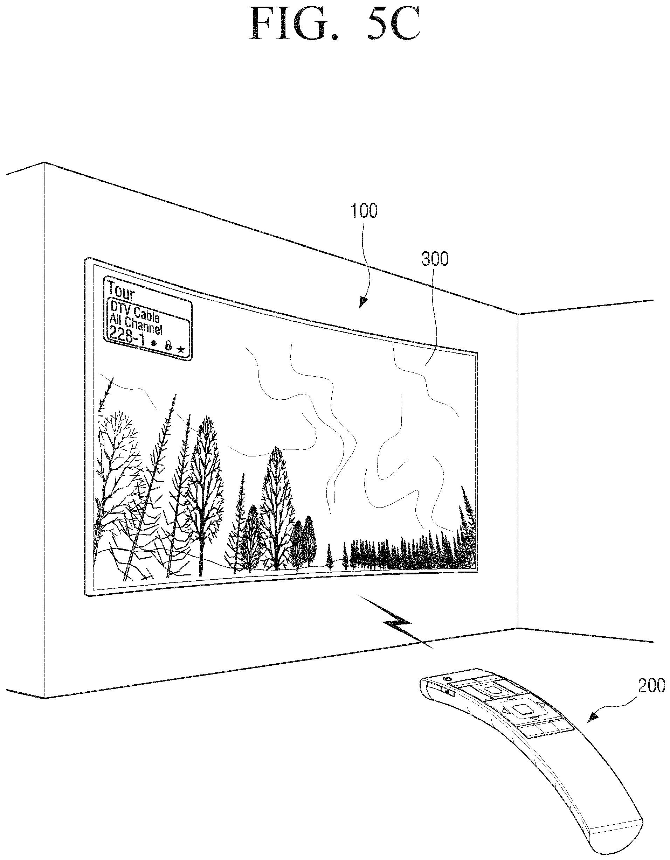

Referring to FIGS. 4, 5B, and 5C, the display apparatus 100 is changed from the standby to the pre-power on mode depending on the received first control information (408).

When the first control information is received, the sub processor (not illustrated) may wake-up the main processor (not illustrated).

When the main processor (not illustrated) is operated, the display apparatus 100 may be changed from the standby mode to the pre-power on mode.

The screen of the display apparatus 100 changed to the pre-power on mode may be continuously off. In the pre-power on mode, the controller 100 may control the power supplier 190 not to supply power to the display 170. Further, the controller 110 may control the power supplier 190 to supply power corresponding to the pre-power on mode unlike the normal mode (for example, different power consumption) in which the broadcast channel is displayed on the display 170.

The display apparatus 100 changed to the pre-power on mode may include the off (for example, audio is not output) of the audio output 175. In the pre-power on mode, the controller 100 may control the power supplier 190 not to supply power to the audio output 175. Further, in the pre-power on mode, the controller 110 may control the power supplier 190 to supply power corresponding to the pre-power on mode unlike the normal mode (for example, different power consumption) in which a sound is output to the audio output 190.

In the pre-power on mode of the display apparatus 100, the controller 110 may supply power to the rest components other than the display 170 and the audio output 175. In the pre-power on mode of the display apparatus 100, the controller 110 may supply power to the rest components other than one of the display 170 and the audio output 175. Further, in the pre-power on mode of the display apparatus 100, the rest components other than the display 170 and the audio output 175 may be operated (for example, reception of content, reception of broadcasting, etc.).

In the display apparatus 100 that is in the pre-power on mode, the controller 100 may not output (for example, video of the display 170 and / or audio of the audio output 175) video, audio, and / or data included in the received broadcast signal.

Referring to FIG. 5C, in the display apparatus 100 that is in the pre-power on mode, the controller 110 may control video 300 (for example, broadcast channel No. 228-1) included in the received broadcast signal to be displayed on the display 170 and audio not to be output from the audio output 175. In contrast, in the display apparatus 100 that is in the pre-power on mode, the controller 110 may control the audio to be output from the audio output 175 and the vide included in the received broadcast signal not to be displayed on the display.

The display apparatus 100 may be changed from the standby mode to the pre-power on mode after passing 12.5 ms, depending on the reception of the first control information.

In the display apparatus 100 that is in the pre-power on mode, when the second control signal is not received from the remote controller 200 for a set time (for example, 1 minute and the set time may be changed by the setting), the state of the display apparatus 100 may return from the pre-power on mode to the standby mode.

According to another exemplary embodiment of the present invention, in the display apparatus 100 that is in the pre-power on mode, the controller 110 may display a screen (for example, welcome screen (not illustrated)) set in the screen. The welcome screen (not illustrated) may be a screen displayed corresponding to the pre-power on mode change of the display apparatus 100. The welcome screen (not illustrated) may be displayed in a shape set in some area (for example, central area of the screen, etc.) of the screen. The rest area of the display apparatus 100 in which the welcome screen (not illustrated) is not displayed may be background (for example, powered-off background or black screen).

The welcome screen (not illustrated) may be displayed by power supplied to some area of the display 170 by the control of the controller 110. The welcome screen (not illustrated) may be a screen displayed by supplying power to only some of the screen unlike the content output displayed on the screen in the normal mode (for example, different power consumption).

After changed to be pre-power on mode, if there is a follow-up input of the user, the display apparatus may be switched to the normal mode.

In step S310 of FIG. 3, the broadcast channel is displayed on the screen of the display apparatus.

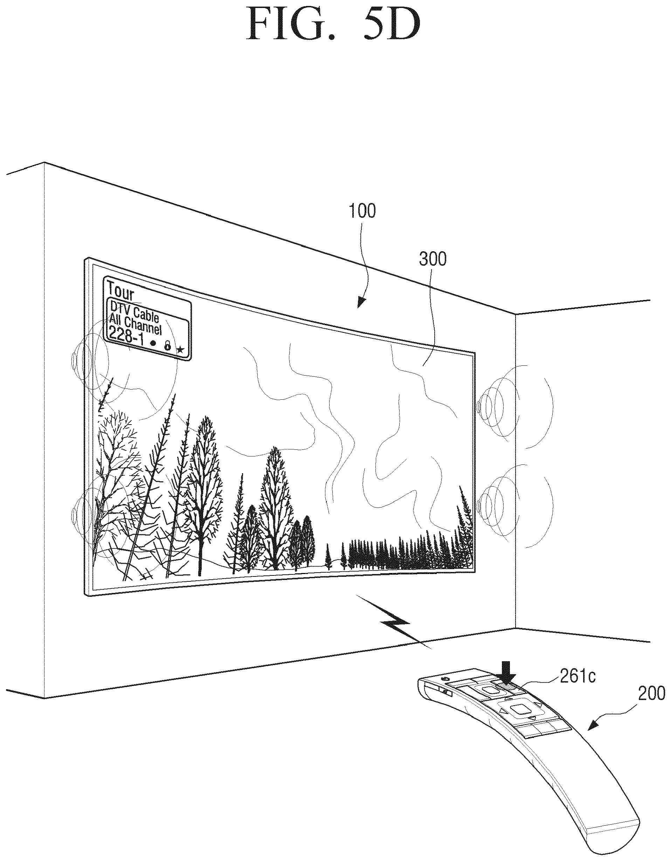

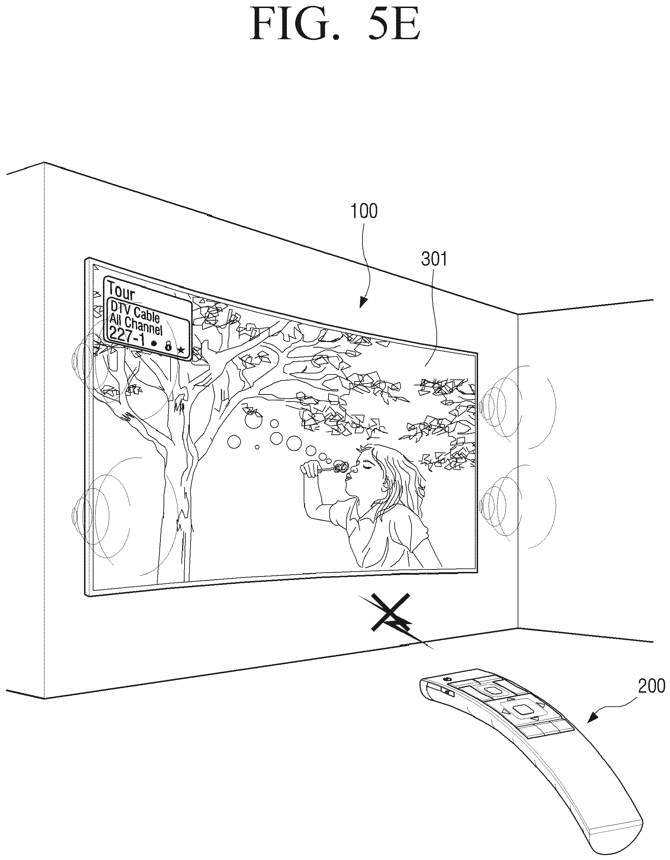

Referring to FIGS. 5D and 5E, the broadcast channel is displayed on the screen of the display apparatus (409). FIGS. 5D and 5E illustrate examples of the screen of the display apparatus on which the broadcast channel is displayed.

Referring to FIG. 5D, the user inputs the second user input to a channel change button 261c of the remote controller 200. The second user input (or selection of the channel change button 261c) to the channel change button 261c may include pressing of the channel change button 261c, a touch of the channel change button 261c, and / or a touch gesture of the channel change button 261c. Further, the selection of the channel change button 261c may include a user's voice (for example, corresponding to the channel change) input through the microphone 263 or a user's gesture (for example, griping the remote controller 200, drawing a circle, etc.) detected by the sensor 264.

The controller 210 of the remote controller 200 may store 'channel change button selection information' corresponding to the selection of the channel change button 261c in the storage 280. The stored channel change button selection information may include a channel change button selection information identifier (ID) for history management, a channel change button selection time, etc.

The controller 210 may use the channel change button selection information to generate the second control information transmitted to the display apparatus 100. The controller 210 may load the second control information stored in the storage 280 or select the second control information from the plurality of stored control information, depending on the detection of the second user input. The second control information may be control information that may change the broadcast channel 300 displayed on the screen of the display apparatus 100.

The controller 210 may transmit the second control information to the display apparatus 100 through the communicator 230. The controller 210 may transmit the second control information to the display apparatus 100 through the Bluetooth communicator 232 in the HID packet form.

The controller 210 may periodically transmit the second control information to the display apparatus 100 through the Bluetooth communicator 232.

The communicator 130 of the display apparatus 100 may receive the HID packet including the second control information from the remote controller 200 by the control of the controller 110. The received second control information may be stored in the storage 180 by the control of the controller 110.

In FIG. 5D, the controller 100 of the display apparatus 100 may change the display apparatus 100 from the pre-power on mode to the normal mode depending on the received second control information. The controller 110 may control the audio corresponding to the video 300 (for example, broadcast channel No. 228-1) displayed on the display 170 to be output from the audio output 175. Further, the controller 110 may output the video 300 (for example, broadcast channel No. 228-1) displayed on the display 170, the audio output from the audio output 175, and data.

Referring to FIG. 5Ee, a broadcast channel 301 (for example, broadcasting that is cable broadcast channel No. 227-1 or content) is displayed on the screen of the display apparatus 100.

The display of the broadcast channel on the screen of the display apparatus 100 is one exemplary embodiment and the content displayed on the screen of the display apparatus 100 by a selection of other buttons of the remote controller 200 may include the broadcast channel, moving pictures played by applications installed in the display apparatus 100, an image displayed by applications, and a web page displayed by a web browser.

The controller 110 of the display apparatus 100 may display the broadcast screen 301 on the display apparatus 100 after passing 12.5 ms or more and 300 ms or less, depending on the reception of the second control information.

When the user grips the remote controller 200 and selects the channel change button 261c, the time required to display broadcasting on the screen of the display apparatus 100 may be 3 seconds (for example, 5 seconds or more depending on the display apparatus) or less.

The storage 180 may store the second control information by the control of the controller 110 depending on the reception of the second control information.

The controller 110 may provide the visual feedback like an animation effect depending on the display of content on the screen. Further, the controller 110 may provide the auditory feedback through the audio output 175 depending on the display of content on the screen.

According to another exemplary embodiment of the present, the display apparatus 100 may immediately change (without the reception of the second control information) the standby mode to the normal mode through the pre-power on mode, depending on the received first control information.

When the first control information is received, the sub processor (not illustrated) may wake-up the main processor (not illustrated).

When the main processor (not illustrated) is operated, the display apparatus 100 may be changed from the standby mode to the normal mode through the pre-power on mode. The change from the standby mode to the standby mode and the normal mode is substantially similar (for example, without the reception of the second control information) to the steps S360 and S370 of FIG. 3 and therefore the overlapping description thereof will be omitted.

In the normal mode, the main processor (not illustrated) may control the broadcast channel or the content displayed before the standby mode is changed to be displayed on the display 170.

When the display apparatus 100 displays the broadcasting and the remote controller 200 does not receive an additional user input, the communication connection between the remote controller 200 and the display apparatus 100 may be kept. Further, when the display apparatus 100 displays the broadcasting and the remote controller 200 does not receive an additional user input, the communication connection between the remote controller 200 and the display apparatus 100 may end. Although the communication connection between the remote controller 200 and the display apparatus 100 ends, the remote controller 200 may be reconnected to the display apparatus 100.

In the step S370 of FIG. 3, when the broadcasting is displayed on the screen of the display apparatus 100, the method for controlling a display apparatus ends.

The foregoing exemplary embodiments mainly describe the display apparatus and the remote controller but may be applied to various types of electronic devices. For example, the foregoing exemplary embodiments may be applied to a source device and external devices that are connected with the Bluetooth low energy and may be applied even to other types of electronic devices that do not include the display.

The methods according to exemplary embodiments of the present invention may be implemented as a program instruction type that may be performed through various computer units and may be recorded in a non-transitory computer readable medium. The computer-readable medium may include a program command, a data file, a data structure or the like, alone or a combination thereof. For example, the computer-readable medium may be stored in a volatile or non-volatile storage device such as a ROM, a memory such as a RAM, a memory chip, and a device or an integrated circuit, or a storage medium which may be read with a machine (for example, computer) simultaneously with being optically or magnetically recorded like a CD, a DVD, a magnetic disk, a magnetic tape, or the like, regardless of whether it is deleted or again recorded.

The memory which may be included in a mobile terminal may be one example of a storage medium which may be read with programs including instructions implementing the exemplary embodiments of the present invention or a machine appropriate to store the programs. The program commands recorded in the computer-readable recording medium may be especially designed and constituted for the present invention or be known to those skilled in a field of computer software.

Although the exemplary embodiments of the present invention have been disclosed for illustrative purposes, those skilled in the art will appreciate that various modifications, additions and substitutions are possible without departing from the present invention, the scope of which is defined in the claims.

## Claims

1. A display apparatus, comprising:
a display;
a communicator connecting the display apparatus with a remote controller; and
a controller controlling the display and the communicator,
wherein the controller controls the display apparatus to be connected with the remote controller depending on an advertising packet received from the remote controller through the communicator, when a mode of the display apparatus powered-off is changed to a standby mode, and controls content to be displayed on the display depending on control information received from the remote controller.

2. The display apparatus as claimed in claim 1, further comprising:
a power supply,
wherein the controller controls the power supply to supply power to the communicator in the standby mode.

3. The display apparatus as claimed in claim 1 or 2, wherein the controller performs control to maintain a connection with the remote controller in the standby mode depending on the advertising packet received through the communicator.

4. The display apparatus as claimed in one of claims 1 to 3, wherein the controller includes a main processor and a sub processor, and the communicator is controlled by the sub processor in the standby mode.

5. The display apparatus as claimed in claim 4, wherein the control information includes first control information including a packet according to a standard of Bluetooth low energy, and the controller controls the main processor to be waked-up using the first control information.

6. The display apparatus as claimed in claim 4 or 5, wherein the controller controls the display to display the content on some of the display depending on reception of the first control information in the standby mode.

7. The display apparatus as claimed in claim 6, further comprising:
an audio output; and
a power supply,
wherein the controller controls the power supply not to supply power to the audio output when the content is displayed on the display.

8. The display apparatus as claimed in one of claims 1 to 7, wherein the controller controls the communicator to maintain a connection to receive the control information from the remote controller in the standby mode.

9. The display apparatus as claimed in one of claims 1 to 8, wherein the control information includes first control information including a packet according to a standard of Bluetooth low energy, and the controller controls the display apparatus to be changed to a normal mode depending on the first control information.

10. A method for controlling a display apparatus, comprising:
searching for a remote controller when an operation mode is changed to a standby mode in the display apparatus powered-off;
receiving an advertising packet from the remote controller through a Bluetooth communicator;
connecting the display apparatus with the remote controller depending on reception of the advertising packet;
receiving control information from the remote controller in the display apparatus in the standby mode; and
displaying content on a display depending on the reception of the control information.

11. The method as claimed in claim 10, wherein when an operation mode of the display apparatus is changed to a standby mode, a connection of the display apparatus with the remote controller ends.

12. The method as claimed in claim 10 or 11, wherein the control information is included in a packet according a standard of the Bluetooth low energy.

13. The method as claimed in one of claims 10 to 12, wherein the control information includes first control information waking-up the display apparatus and second control information changing an operation mode of the display apparatus to a normal mode.

14. A remote controller, comprising:
a sensor;
a communicator connecting the remote controller with a display apparatus; and
a controller controlling the sensor and the communicator,
wherein the controller controls the communicator to transmit an advertising packet for connection with the display apparatus to the display apparatus when the connection with the apparatus powered-off ends, and controls control information corresponding to a user input detected by the sensor to be transmitted to the display apparatus in a standby mode through the communicator when the remote controller is connected with the display apparatus.

15. The remote controller as claimed in claim 14, wherein the user input includes one of a contact of the remote controller, gripping of the remote controller, a button input of the remote controller, a motion of the remote controller, and an acceleration change of the remote controller.
